# EUROPÄISCHE PATENTANMELDUNG

(11) **EP 4 333 266 A1**
(43) Veröffentlichungstag der Anmeldung: **06.03.2024**
(21) Anmeldenummer: 22193658.6
(22) Anmeldetag: 02.09.2022
(51) Int. Cl.: H02K 1/278, H02K 1/22, H02K 21/14, H02K 3/47, H02K 16/02, H02K 9/22, H02K 29/08, H02K 29/10

(54) **ELEKTRONISCH KOMMUTIERTER ELEKTROMOTOR**

(71) Anmelder: maxon international ag, 6072 Sachseln (CH)
(72) Erfinder: Lussmann, Mario, 6064 Kerns (CH); Teimel, Arnold, 6074 Giswil (CH); Han, Michel, 6333 Hünenberg See (CH)
(74) Vertreter: Grünecker Patent- und Rechtsanwälte PartG mbB

(57) **Zusammenfassung**

Die vorliegende Erfindung betrifft einen elektronisch kommutierten Elektromotor, insbesondere Kleinstmotor mit einem Durchmesser kleiner oder gleich 70 mm, mit einem Stator, der eine nutenlose hohlzylindrische Statorwicklung aufweist, und einem Rotor, der ein hohlzylindrisches Rotorelement, welches die Statorwicklung umgibt und als Außenrückschluss wirkend ausgebildet ist, und einen vollzylindrischen Rotormagnetabschnitt aufweist. Der Rotormagnetabschnitt ist innerhalb der Statorwicklung angeordnet. Ein radial äusserer Bereich, welcher mindestens 70 % des Volumens des vollzylindrischen Rotormagnetabschnitts umfasst, ist als permanentmagnetischer Rotormagnet ausgeführt. Des Weiteren weist der permanentmagnetische Rotormagnet (10) mindestens vier Rotorpole auf. Die Erfindung betrifft auch die Verwendung eines Rotors in einem solchen elektronisch kommutierten Elektromotor.

## Beschreibung

Die vorliegende Erfindung betrifft einen elektronisch kommutierten Elektromotor, insbesondere Kleinstmotor mit einem Durchmesser kleiner oder gleich 70 mm, mit einem Stator, der eine nutenlose hohlzylindrische Statorwicklung aufweist, und einem Rotor, der ein hohlzylindrisches Rotorelement, welches die Statorwicklung umgibt und als Außenrückschluss wirkend ausgebildet ist, und einen vollzylindrischen Rotormagnetabschnitt aufweist, welcher innerhalb der Statorwicklung angeordnet ist, wobei ein radial äusserer Bereich, welcher mindestens 70 % des Volumens des vollzylindrischen Rotorabschnitts umfasst, als permanentmagnetischer Rotormagnet ausgeführt ist.

Ein solcher Motor ist aus der US 2014/0077648 A1 bekannt. Dort ist in einer Ausführungsform (Fig. 9) ein Elektromotor mit einem mitdrehenden Außenrückschluss gezeigt. Durch einen solchen Außenrückschluss wird das Drehmoment eines Motors mit eisenloser Wicklung erhöht. Elektromotoren mit einem solchen mitdrehenden Außenrückschluss haben den Vorteil, dass keine Ummagnetisierung im Rückschluss und damit kaum Wirbelströme erzeugt werden. Insbesondere bei hohen Drehzahlen, im Leerlauf oder bei geringer Last können so hohe Wirbelstromverluste vermieden werden. Nachteilig ist allerdings, dass sich die Massenträgheit des Rotors durch den außenliegenden rotierenden Rückschluss deutlich erhöht. In der US 2014/0077648 A1 ist ein zweipoliger Motor beschrieben, der insbesondere vorteilhaft ist für kleine schnelldrehende Highspeed-Motoren. Solche schnelldrehenden Highspeed-Motoren kommen generell mit relativ kleinem Drehmoment aus.

Darüber hinaus gibt es Entwicklungen, bei denen versucht wird, die Masse des Rotors zu verringern, indem beispielsweise der innenliegende permanentmagnetische Teil des Rotors hohlzylindrisch bzw. topfförmig ausgeführt wird. Solche Motoren sind z.B. aus der US 2002/0171306 A1 und der DE 11 2015 004 042 T5 bekannt. Diese beschreiben Elektromotoren mit rotierenden Außenrückschlüssen, bei welchen der innenliegende Rotorteil topfförmig mit mehrpolpaarigen an der Oberfläche montierten Magneten ausgeführt ist. Insbesondere bei Kleinmotoren ist es so nicht möglich genug Magnetvolumen zur Erzeugung eines hohen Drehmoments unterzubringen. In der EP 0 230 639 B1 ist zwar ein vergleichbarer Motor mit einem hohen Leistung-zu-MasseVerhältnis gezeigt, allerdings hat dieser einen Durchmesser von 165 mm und ist daher kein Kleinstmotor mehr. Insbesondere bei Klein- und Minimotoren mit einem Durchmesser kleiner oder gleich 70 mm, ist es schwierig für leistungsstarke Motoren viel Drehmoment zu erzeugen, weil der Rotor dann mit nur wenig Magnetmaterial meist in Form von Oberflächenmagneten am Rotor ausgeführt werden kann.

Ein weiterer vergleichbarer Motor ist in der EP 0 670 621 A1 beschrieben, bei welchem der Rotor als Nabe ausgeführt ist, die sich um eine feststehende Motorachse dreht.

Es gibt im Stand der Technik daher das Bestreben, insbesondere bei Kleinstmotoren mit einem Durchmesser kleiner oder gleich 70 mm einen elektronisch kommutierten Elektromotor der eingangs genannten Art bereitzustellen, der ein hohes Drehmoment aufweist.

Diese Aufgabe wird erfindungsgemäß durch einen elektronisch kommutierten Elektromotor nach Anspruch 1 gelöst. Hierzu weist der permanentmagnetische Rotormagnet mindestens vier Rotorpole auf. Es wird demnach eine kompakte Baueinheit geschaffen, die mindestens vier Rotorpole aufweist, so dass der innerhalb der Statorwicklung angeordnete Rotormagnetabschnitt vollzylindrisch ausgeführt ist. Diese Erkenntnis scheint zunächst sehr überraschend. Allerdings zeigen die Entwicklungen im Stand der Technik, dass entweder Highspeed-Motoren das Ziel war oder bei mehrpoligen Motoren der Fokus auf der Gewichtsreduktion durch Verwendung einer topfförmigen Ausgestaltung des Rotors gelegen hat. Eine weitere Maßnahme im Stand der Technik die Masse zu reduzieren bestand darin, auf die Welle als rotierende Masse zu verzichten und stattdessen eine Achse zu verwenden. Es gab demnach bei derartigen Motoren unterschiedliche Entwicklungsströme, die in eine jeweils andere Richtung weisen.

Durch die Verwendung eines vollzylindrischen, mehrpolpaarigen Rotors kann, wenn mehr als 70 %, insbesondere mehr als 75 % oder mehr als 80 % eines radial äusseren Bereichs des vollzylindrischen Abschnitts permanentmagnetisch ausgeführt sind, ein besonders hohes Drehmoment erreicht werden.

In einer bevorzugten Ausführungsform kann der permanentmagnetische Rotormagnet auf der Welle angeordnet sein. Zumindest in einem Abschnitt kann der vollzylindrische Rotormagnetabschnitt die Rotorwelle umfassen. Dadurch kann der permanentmagnetische Rotormagnet magnetisiert werden, bevor dieser mit der Welle verbunden wird.

In einer weiteren bevorzugten Ausführungsform formt der vollzylindrische Rotormagnetabschnitt zumindest einen Abschnitt der Rotorwelle. Dadurch muss zumindest abschnittsweise keine zusätzliche Rotorwelle eingesetzt werden. Somit können Kosten und Bauraum eingespart werden. Zusätzlich kann der magnetische Anteil am Rotor erhöht werden, wodurch sich ein höheres Drehmoment ergibt.

Bei einer günstigen Ausführungsform ist vorgesehen, dass der permanentmagnetische Rotormagnet mindestens sechs, bevorzugt mindestens acht Rotorpole aufweist. Durch die Erhöhung der Motorpolzahl kann das Drehmoment des Motors und die präzise Ausrichtung des Rotors bei Direktabtastung des Rotormagnetfeldes durch die Kommutierungssensorik erhöht werden.

Bevorzugt ist der permanentmagnetische Rotormagnet aus mehreren Permanentmagnetsegmenten gebildet, welche jeweils die Rotorpole darstellen. Der Permanentmagnet ist somit aus mehreren Segmenten aufgebaut, die sich kompakt zusammensetzen lassen. Die einzelnen Permanentmagnetsegmente lassen sich vor dem Zusammenbau besser und stärker magnetisieren. Dadurch kann das Drehmoment des Motors erhöht werden.

Günstigerweise sind die Permanentmagnetsegmente in radialer Richtung magnetisiert und die Magnetisierungsrichtung von in Umfangsrichtung nebeneinander angeordneter Permanentmagnetsegmente ist entgegengesetzt. Die Magnetisierung in radialer Richtung sorgt für deutlich voneinander abgrenzbare Rotorpole. Insbesondere bei kleinen Motoren kann durch die entgegengesetzte Magnetisierung ein effizienter Aufbau des Rotormagneten erreicht werden.

Bevorzugt kann jedes Permanentmagnetsegment eine minimale radiale Höhe aufweisen, die größer ist als das 0,25-fache des Außendurchmessers des Rotormagneten. Durch die relativ grosse Grösse der Permanentmagnetsegment, kann relativ viel magnetisches Material in den Rotor eingebracht werden. Dadurch ergibt sich ein hohes Drehmoment des Motors. Bei einer Ausführung des Rotors mit einer durchgehenden Rotorwelle kann jedes Permanentmagnetsegment eine maximale Höhe aufweisen, die kleiner oder gleich ist als das 0,35-fache des Außendurchmessers des Rotormagneten. Um ein gewisses Drehmoment an der Rotorwelle des Motors abgeben zu können und um die Magnete effizient an der Rotorwelle befestigen zu könne, sollte die Rotorwelle einen gewissen minimalen Durchmesser aufweisen, wodurch die maximale Höhe der Rotormagnete begrenzt ist. Im Vergleich zu topfförmig ausgeführten Rotoren werden relativ dicke Permanentmagnetsegmente verwendet, die einem hohen oder sehr hohen Drehmoment zuträglich sind.

Darüber hinaus können gemäß einer Ausführungsform die Permanentmagnetsegmente eine Querschnittsform aufweisen, die außen von einem Kreisbogen, seitlich von zwei an den Kreisbogen angrenzenden Kreisradienabschnitten und innen von einem Kreissehnenabschnitt begrenzt ist, wobei der Kreisbogen eine Länge aufweist, die im Wesentlichen dem Umfang des Rotormagnets geteilt durch die Rotorpolzahl entspricht. Bei den Permanentmagnetsegmenten handelt es sich demnach um seitlich eingekürzte Kreissegmente, wobei die Einkürzung entlang einer Radiuslinie erfolgt. Die Permanentmagnetsegmente sind bevorzugt symmetrisch zu einer Mittellinie ausgestaltet und weisen eine konvexe Rückenfläche und eine gerade Innenfläche sowie zwei gerade, im Winkel aufeinander zulaufende Seitenflächen auf. Hierdurch ist es sehr einfach möglich mehrere dieser entsprechend angepassten Permanentmagnetsegmente zu einem Hohlzylinder zusammenzusetzen.

Darüber hinaus können die Permanentmagnetsegmente eine Länge aufweisen, die im Wesentlichen der Länge des Rotormagnetabschnitts entspricht.

Bevorzugt können die Permanentmagnetsegmente miteinander verklebt und/oder mittels einer Hülse zusammengehalten sein. Die Hülse ist günstigerweise magnetisch nicht leitend. Dadurch werden die magnetischen Feldlinien nicht über die Hülse rückgeschlossen und in ein benachbartes Permanentmagnetsegment geleitet, wodurch das Rotormagnetfeld im Bereich des Stators geschwächt würde.

Gemäß einer Ausführungsform kann das permanentmagnetische Material für den Rotormagneten ein Neodym-Eisen-Bor-Material oder ein Samarium-Kobalt-Material sein. Hierdurch ist ein besonders leistungsstarker Rotormagnet erzeugbar.

In einer vorteilhaften Ausgestaltung ist vorgesehen, dass innerhalb des Rotormagneten ein Innenrückschluss aus einem weichmagnetischen Material ausgeführt ist. Insbesondere, wenn Permanentmagnetsegmente mit einer oben beschriebenen Form, d.h. mit flacher Innenseite verwendet werden, kann der Innenrückschluss hieran angepasst einen polygonalen Querschnitt aufweisen, wodurch die Permanentmagnetsegmente satt auf dem Rückschluss aufsitzen und ein Drehmomentübertrag sehr einfach möglich ist. Bevorzugt ist innerhalb des Innenrückschlusses eine Rotorwelle angeordnet, auf der dieser fest aufsitzt. Es ist auch möglich die Rotorwelle als Eisenrückschluss zu verwenden, um Bauraum einzusparen. Dabei kann die Rotorwelle ebenfalls einen polygonalen Querschnitt aufweisen.

Günstigerweise kann das hohlzylindrische Rotorelement topfförmig (d. h. als Rotortopf) ausgebildet sein, dessen Topfboden mit der Rotorwelle verbunden ist, wobei die die hohlzylindrische Statorwicklung umgebende Topfwand ein weichmagnetisches Material zum Ausbilden des Außenrückschlusses umfasst. Bevorzugt umfasst der Topfboden ein Material, das einen magnetischen Rückschluss verhindert, während der Außenrückschluss konzentriert im Bereich der hohlzylindrischen Statorwicklung und des innenliegenden Rotormagnetabschnitts wirkt. Durch den Außenrückschluss wird der magnetische Fluss, welcher durch den Stator erzeugt wird, im Außenbereich optimal geleitet, wodurch sich in Wechselwirkung mit dem permanentmagnetischen Rotor ein hohes Drehmoment erzeugen lässt.

Günstigerweise kann der Topfboden Öffnungen und/oder Aussparungen zur Gewichtsreduktion aufweisen, wobei der jeweilige Flächenschwerpunkt der Öffnungen und/oder Aussparungen in radialer Richtung weiter von einer Rotorachse entfernt ist als von einem Außenmantel des Rotortopfs. Die Öffnungen und/oder Aussparungen können bevorzugt kreisrund ausgeführt sein und bevorzugt symmetrisch um die Rotorwelle angeordnet sein. Es können aber auch ovale, speichenförmige oder schlitzartige Geometrien vorgesehen sein, um das Gewicht und damit das Massenträgheitsmoment des Topfbodens zu reduzieren. Je weiter außen in radialer Richtung die Öffnungen und/oder Aussparungen angeordnet sind, desto größer ist die Verringerung des Massenträgheitsmoments des Rotors. Zusätzlich verhindern die Öffnungen den magnetischen Fluss im Topfboden.

Bei einer Variante des elektronisch kommutierten Elektromotors ist vorgesehen, dass die nutenlose hohlzylindrische Wicklung einseitig in eine thermisch gut leitende Ausgussmasse eingebettet ist, wobei die verwendete Ausgussmasse Wärmeleitfähigkeitswerte von 1 W/mK bis zu 20 W/mK aufweist. Die Wärmeleitfähigkeit der Ausgussmasse wird bevorzugt in aller Regel durch Zugabe von Füllstoffpartikeln wie Kupfer oder Aluminium erreicht. Möglich sind aber auch Graphite oder Ruße. Mit Hilfe von keramischen Füllstoffen wie Aluminiumoxid und Bornitrid ist darüber hinaus auch eine elektrische Isolationswirkung erzielbar. Insbesondere, wenn der Anschlussbereich der nutenlosen hohlzylindrischen Wicklung in eine thermisch sehr gut leitende Ausgussmasse eingegossen ist, durch welche die Wärme der Wicklung besser nach außen hin zu einem Statorflansch abgeführt werden kann, treten die Vorteile besonders hervor. Diese Wärmeabfuhr ist auch notwendig, da die Wicklung freitragend ist und nicht mit dem Rückschluss in Kontakt steht und damit Wärme nicht oder nur sehr begrenzt abgegeben werden kann.

Bei einer weiteren vorteilhaften Ausgestaltungsvariante ist vorgesehen, dass redundante Sensoreinrichtungen zur Bestimmung der Winkellage des Rotors vorgesehen sind, wobei die Sensoreinrichtungen unterschiedliche Sensortypen zum Bestimmen unterschiedlicher physikalischer Größen sind, und wobei bevorzugt ein optischer Encoder mit einem magnetischen Encoder kombiniert vorgesehen sind. Durch redundante Sensoreinrichtungen wird die Ausfallsicherheit erhöht. Durch verschiedene Sensortypen wird die Störanfälligkeit beispielsweise durch Staub oder Magnetfelder berücksichtigt. Die präzise Winkellagebestimmung ist insbesondere in Anwendungen in den Bereichen Chirurgierobotik, Inspektionsroboter, Steer-by-Wire, Augmented Reality, Virtual Reality und Force-Feedback Anwendungen vorteilhaft. Insbesondere die Kombination von einem hochauflösenden optischen Encoder mit einem magnetischen Encoder sorgt für eine hohe Ausfallsicherheit bei den gängigsten Störarten, da oftmals nur eine physikalische Grösse von Störungen betroffen ist

Darüber hinaus bezieht sich die Erfindung auch auf die Verwendung eines Rotors in einem elektronisch kommutierten Elektromotor nach einem der Ansprüche 1 bis 14. Der Rotor weist ein hohlzylindrisches Rotorelement, welches die Statorwicklung umgibt und als Außenrückschluss wirkend ausgebildet ist, und einen vollzylindrischen Rotormagnetabschnitt auf, welcher innerhalb einer Statorwicklung angeordnet ist, wobei ein radial äusserer Bereich, welcher mindestens 70 % des Volumens des vollzylindrischen Rotormagnetabschnitts umfasst, als permanentmagnetischer Rotormagnet ausgeführt, und wobei der vollzylindrische Rotormagnetabschnitt mindestens vier Rotorpole aufweist.

Im Folgenden werden Ausführungsbeispiele der vorliegenden Erfindung anhand von Zeichnungen näher erläutert. Es zeigen:
- Fig. 1: eine schematische Querschnittsdarstellung eines erfindungsgemäßen Elektromotors,
- Fig. 2: eine perspektivische Darstellung einer Ausführungsform eines Rotormagneten mit Innenrückschluss,
- Fig. 3: eine perspektivische Darstellung einer Rotorausführung, und
- Fig. 4: einen Vollschnitt durch eine Ausführungsform eines Statorflanschs mit angebrachter hohlzylindrischer Statorwicklung.

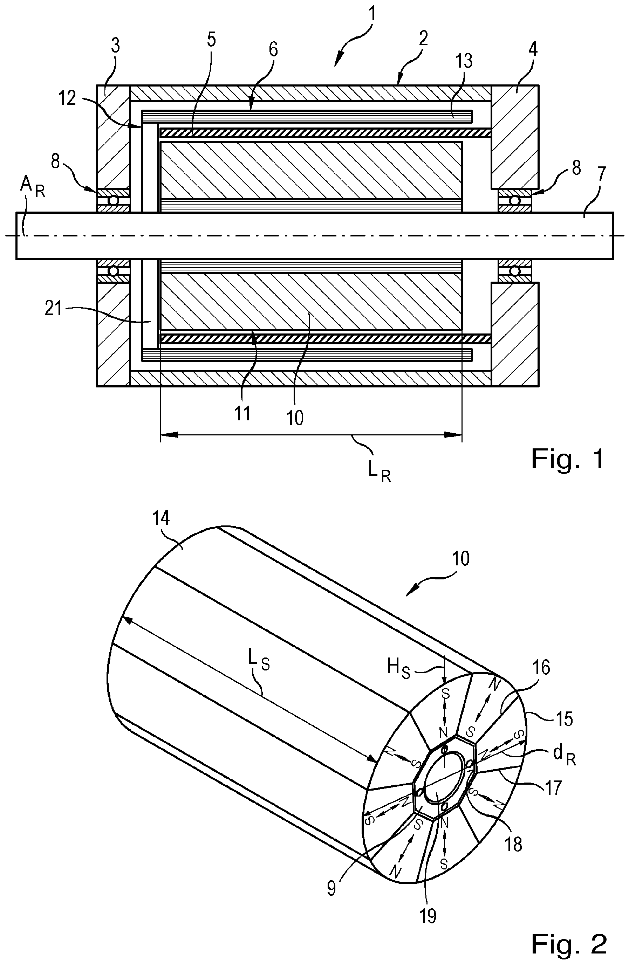

Die Erfindung bezieht sich insbesondere auf einen elektronisch kommutierten Elektromotor, der als Kleinstmotor mit einem Durchmesser kleiner oder gleich 70 mm ausgeführt ist. In Fig. 1 ist in schematischer Darstellung ein solcher Elektromotor 1 dargestellt. Es handelt sich bei Fig. 1 um eine schematische Darstellung, weshalb nur die für die Erfindung wesentlichen Bestandteile gezeigt sind. Zum Beispiel fehlen im Wesentlichen die Bestandteile, die die elektronische Kommutierung des Elektromotors 1 bewirken.

Der Elektromotor 1 umfasst ein Motorgehäuse 2, das einen Gehäusedeckel 3 und einen Statorflansch 4 aufweist. Auf der Innenseite des Statorflanschs 4 ist eine nutenlose, hohlzylindrische Statorwicklung 5 angebracht. Die Herstellung solcher nutenlosen hohlzylindrischen Wicklungen ist hinreichend bekannt. Der Gehäusedeckel 3 und der Statorflansch 4 verschließen das Motorgehäuse 2 stirnseitig. Im Inneren des Motorgehäuses 2 ist drehbar ein Rotor 6 angeordnet. Der Rotor 6 weist eine vollzylindrische Rotorwelle 7 auf, die jeweils mittels Wälzkörperlager 8 zum einen in dem Gehäusedeckel 3 und zum anderen in dem Statorflansch 4 drehbar gelagert ist. Hierdurch ist der Rotor 6 um die Rotorachse A_{R} drehbar. Neben der Rotorwelle 7 weist der Rotor 6 einen auf der Rotorwelle 7 fest angebrachten, hülsenförmigen Innenrückschluss 9 aus einem Weicheisenmaterial auf. Auf dem Innenrückschluss ist ein Rotormagnet 10 angeordnet. Die Rotorwelle 7, der Innenrückschluss 9 und der Rotormagnet 10 formen zusammen einen vollzylindrischen Rotormagnetabschnitt 11, dessen Länge L_{R} von der Länge des Abschnitts des Rotormagnets 10 bestimmt wird, der innerhalb der hohlzylindrischen Statorwicklung 5 angeordnet ist. Abweichungen von der Vollzylindrigkeit des Rotormagnetabschnitts 11 von bis zu max. 10 %, bevorzugt bis zu max. 5 % des Gesamtvolumens des Rotormagnetabschnitts 11 sind zulässig; jedoch in aller Regel nicht erwünscht. Im vorliegenden Ausführungsbeispiel weist der Rotormagnet 10 acht Rotorpole auf, die durch entsprechende Segmentierung und Magnetisierung erzeugt werden (mindestens vier Rotorpole werden gefordert). Darüber hinaus weist der Rotor 6 ein topfförmiges Rotorelement 12 auf, das die hohlzylindrische Statorwicklung 5 außen umgibt und zu dieser einen radialen Abstand aufweist. Die Topfwand des topfförmigen Rotorelements 12 formt einen Außenrückschluss 13 aus einem weichmagnetischen Material. Der Topfboden 21 des topfförmigen Rotorelements 12 ist mit der Rotorwelle 7 verbunden und aus einem nicht magnetisierbaren Material geformt.

Aufgrund des oben beschriebenen Aufbaus ist die nutenlose hohlzylindrische Statorwicklung 5 über einen großen Abschnitt innerhalb des Rotors 6 angeordnet. Demnach kann sich der Rotor 6 sowohl innerhalb als auch außerhalb um die Statorwicklung 5 drehen, wobei die Statorwicklung 5 in einem Spalt zwischen Außenrückschluss 13 und Rotormagnet 10 angeordnet ist. Durch den mitdrehenden Außenrückschluss 13 besteht der Vorteil, dass keine Ummagnetisierung im Außenrückschluss 13 und damit kaum Wirbelströme erzeugt werden. Insbesondere bei hohen Drehzahlen, im Leerlauf oder bei geringer Last können so hohe Wirbelstromverluste vermieden werden. Als weichmagnetisches Material wird im vorliegenden Ausführungsbeispiel Eisen eingesetzt. Als permanentmagnetisches Material für den Rotormagneten 10 wird ein Neodym-Eisen-Bor-Material verwendet (möglich ist auch ein Samarium-Kobalt-Material).

Die Vorteile eines solchen Elektromotors 1 sind insbesondere aufgrund des verwendeten vollzylindrischen, mehrpolpaarigen Rotormagnetabschnitts 11, dass ein hohes Drehmoment erreicht werden kann. Das ist bislang insbesondere bei Klein- und Minimotoren mit einem Durchmesser kleiner oder gleich 70 mm für leistungsstarke Motoren kaum möglich und wird erst durch diese Erfindung eröffnet.

Im Folgenden werden anhand der Fig. 2 bis 4 zueinander passende Bestandteile eines Elektromotors 1 dargestellt, wie sie in dem anhand Fig. 1 schematisch dargestellten Aufbau eines Elektromotors 1 konkret zur Anwendung kommen können.

In Fig. 2 ist perspektivisch der Rotormagnet 10 mit Innenrückschluss 9 dargestellt. Der Rotormagnet 10 ist in diesem Ausführungsbeispiel aus acht Permanentmagnetsegmenten 14 zusammengesetzt. Im zusammengesetzten Zustand bilden die acht Permanentmagnetsegmente 14 einen hohlzylindrischen Rotormagneten 10 mit einem Außendurchmesser d_{R}. Jedes Permanentmagnetsegment 14 weist eine Querschnittsform auf, die außen von einem Kreisbogen 15, seitlich von zwei an den Kreisbogen 15 angrenzenden Kreisradienabschnitten 16 und 17 und innen von einem Kreissehnenabschnitt 18 begrenzt ist. Die Querschnittsform eines Permanentmagnetsegments 14 ist symmetrisch zu einer senkrecht auf der Rotorachse A_{R} stehenden Mittellinie ausgebildet. Die Länge Ls eines Permanentmagnetsegments 14 entspricht im vorliegenden Fall der Länge L_{R} des Rotormagnetabschnitts 11. Jedes Permanentmagnetsegment 14 besteht im vorliegenden Fall aus einem Neodym-Eisen-Bor-Material und weist eine Höhe Hs auf. Die Länge des Kreisbogens 15 entspricht im Wesentlichen dem Umfang des Rotormagnets 10 geteilt durch die Rotorpolzahl acht. Eventuell ist die Länge des Kreisbogens 15 etwas kleiner. Dies hängt von der Verbindungstechnik ab. Im vorliegenden Fall sind die Permanentmagnetsegmente 14 miteinander verklebt. Aufgrund des geradlinigen Kreissehnenabschnitts 18 weist ein Permanentmagnetsegment 14 eine ebene Innenfläche auf. Gemeinsam formen die Permanentmagnetsegmente 14 eine im Querschnitt polygonförmige (Achteck) Innenöffnung. In dieser Innenöffnung ist der am Außenumfang entsprechend polygonal (achteckig) ausgeformte Innenrückschluss 9 angeordnet und mit den Permanentmagnetsegmenten 14 fest verbunden. Der Innenrückschluss 9 weist die gleiche Länge auf, wie die Länge Ls der Permanentmagnetsegmente 14. Der Innenrückschluss 9 weist eine im Querschnitt kreisförmige Öffnung 19 auf, in der die Rotorwelle 7 drehfest angeordnet ist.

Die Permanentmagnetsegmente 14 sind jeweils in radialer Richtung polarisiert, wobei benachbarte Permanentmagnetsegmente 14 eine entgegengesetzte Polarisierungsrichtung aufweisen (s. Fig. 2). Jedes Permanentmagnetsegment 14 bildet einen Rotorpol aus.

Der durch die zusammengesetzten Permanentmagnetsegmente 14 geformte Rotormagnet 10, der Innenrückschluss 9 und der Längenabschnitt der Rotorwelle 7, der im Innenrückschluss 9 angeordnet ist, formen gemeinsam den vollzylindrischen Rotormagnetabschnitt 11.

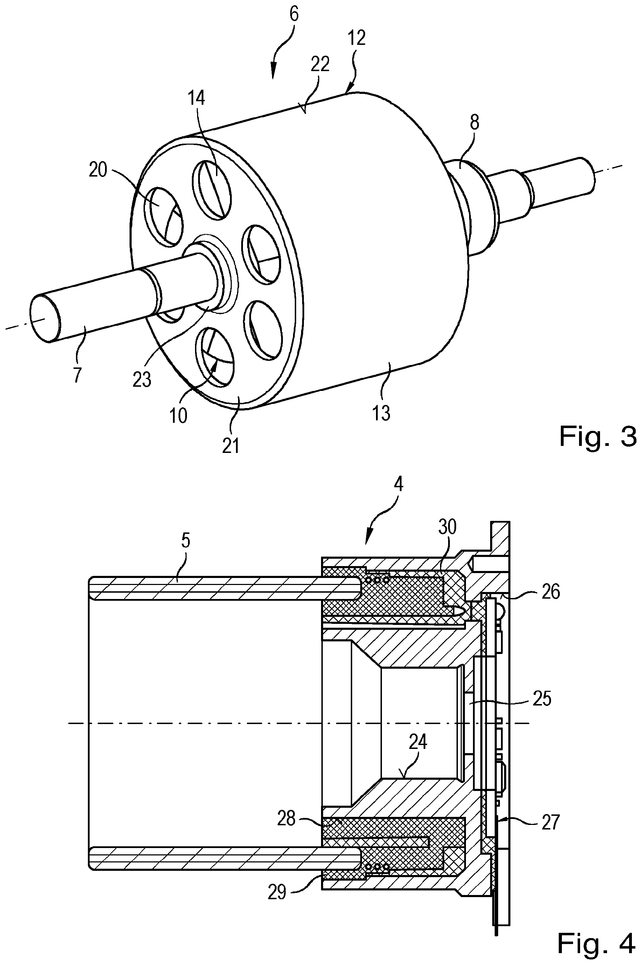

Anhand der Fig. 3 ist zu erkennen, dass das topfförmige Rotorelement 12 einen mit Öffnungen 20 versehenen Topfboden 21 aufweist. Sämtliche Öffnungen 20 weisen einen kreisförmigen Querschnitt auf und auch den gleichen Mittenabstand zur Achse A_{R} des Rotors 6. Bei der Anordnung der Öffnung 20 ist darauf geachtet worden, dass der jeweilige Flächenschwerpunkt der Öffnungen 20 in radialer Richtung weiter von der Rotorachse A_{R} entfernt ist als von dem Außenmantel 22 des topfförmigen Rotorelements 12. Hierdurch wird eine Reduktion des Massenträgheitsmoments des Rotors 6 erzielt. Durch die Öffnungen 20 hindurch ist zu erkennen, dass im Inneren des topfförmigen Rotorelements 12 der in Fig. 2 dargestellte Rotormagnet 10 mit Innenrückschluss 9 angeordnet ist. Am offenen Ende des topfförmigen Rotorelements 12 ist noch ein auf der Rotorwelle 7 platziertes Wälzkörperlager 8 zu erkennen.

Das topfförmige Rotorelement 12 weist an seinem Topfboden 21 einen vorstehenden Bund 23 auf, der der besseren Befestigung des Rotorelements 12 auf der Rotorwelle 7 dient.

In Fig. 4 ist eine Ausführungsform eines Statorflanschs 4 dargestellt, wie er in Kombination mit dem in Fig. 3 dargestellten Rotor 6 verwendet werden kann. Der Statorflansch 4 weist eine zylindrische Aufnahme 24 zum Anordnen des in Fig. 3 dargestellten Wälzkörperlagers 8 auf. Das entsprechend zugehörige Ende der Rotorwelle 7 erstreckt sich durch eine entsprechende Öffnung 25 des Statorflanschs 4 nach außen. An der der Statorwicklung 5 abgewandten Seite ist der Statorflansch 4 mit einer Aussparung 26 versehen, in der eine Sensor- und Steuerplatine 27 angeordnet ist. Mit dieser Platine 27 wird die elektronische Kommutierung des Elektromotors 1 gesteuert. Auf der der Statorwicklung 5 zugewandten Seite ist der Statorflansch 4 ebenfalls mit einer Aussparung 28 versehen. Das Anschlussende der Statorwicklung 5 ist teilweise in dieser Aussparung 28 aufgenommen und in eine thermisch leitfähige Ausgussmasse 29 29 eingebettet. Die verwendete Ausgussmasse ist sehr gut thermisch leitend, so dass Wärme aus der Statorwicklung 5 abgeleitet werden kann. Die Ausgussmasse kann auch ein Klebstoff sein. In der Aussparung 28 ist darüber hinaus ein elektrisch nicht leitfähiger Isolationsring 30 aus einem spritzgegossenem thermisch leitfähigen Kunststoffmaterial vorgesehen, das die Statorwicklung 5 mit der Platine 27 und der Stromversorgung verbindet. Aufgrund der Ausgestaltung des Statorflanschs 4 wird der Rotor 6 so platziert, dass sich der Rotormagnetabschnitt 11 im geringen Abstand innerhalb der hohlzylindrischen Statorwicklung 5 und der Außenrückschluss 13 als Bestandteil des Rotorelements 12 in geringem Abstand außerhalb um die Statorwicklung 5 gemeinsam drehen können.

Hierdurch wird ein Kleinstmotor mit einem Durchmesser kleiner oder gleich 70 mm geschaffen, mit dem ein hohes Drehmoment bei minimalen Leerlaufverlusten erreicht werden kann.

Bestandteil der Platine 27 sind auch ein hochauflösender optischer Encoder und ein magnetischer Encoder. Durch diese redundanten Sensoreinrichtungen wird die Ausfallsicherheit erhöht. Die beiden verwendeten Sensoreinrichtungen basieren auf unterschiedlichen physikalischen Prinzipien und unterliegen daher unterschiedlichen Störanfälligkeiten. Im konkreten Fall wird die Störanfälligkeit beispielsweise durch Staub oder Magnetfelder berücksichtigt. Die präzise Winkellagebestimmung ist insbesondere in Anwendungen in den Bereichen Chirurgierobotik, Inspektionsroboter, Steer-by-Wire, Augmented Reality, Virtual Reality und Force-Feedback Anwendungen vorteilhaft.

### Liste der Bezugszeichen

- 1: Elektromotor
- 2: Motorgehäuse
- 3: Gehäusedeckel
- 4: Statorflansch
- 5: Statorwicklung
- 6: Rotor
- 7: Rotorwelle
- 8: Wälzkörperlager
- 9: Innenrückschluss
- 10: Rotormagnet
- 11: Rotormagnetabschnitt
- 12: Rotorelement
- 13: Außenrückschluss
- 14: Permanentmagnetsegment
- 15: Kreisbogen
- 16: Kreisradienabschnitt
- 17: Kreisradienabschnitt
- 18: Kreissehnenabschnitt
- 19: Öffnung
- 20: Öffnung
- 21: Topfboden
- 22: Außenmantel
- 23: Bund
- 24: zylindrische Aufnahme
- 25: Öffnung
- 26: Aussparung
- 27: Platine
- 28: Aussparung
- 29: Ausgussmasse
- 30: Isolationsring
- A_{R}: Rotorachse
- Ls: Länge Permanentmagnetsegment
- L_{R}: Länge Rotormagnetabschnitt
- d_{R}: Außendurchmesser Rotormagnet
- Hs: Höhe Permanentmagnetsegment

## Patentansprüche

1. Elektronisch kommutierter Elektromotor (1), insbesondere Kleinstmotor mit einem Durchmesser kleiner oder gleich 70 mm, einem Stator, der eine nutenlose hohlzylindrische Statorwicklung (5) aufweist, und einem Rotor (6), der ein hohlzylindrisches Rotorelement (12), welches die Statorwicklung (5) umgibt und als Außenrückschluss (13) wirkend ausgebildet ist, und einen vollzylindrischen Rotormagnetabschnitt (11) aufweist, welcher innerhalb der Statorwicklung (5) angeordnet ist, wobei ein radial äusserer Bereich, welcher mindestens 70 % des Volumens des vollzylindrischen Rotormagnetabschnitts (11) umfasst, als permanentmagnetischer Rotormagnet (10) ausgeführt ist, **dadurch gekennzeichnet, dass** der permanentmagnetische Rotormagnet (10) mindestens vier Rotorpole aufweist.

2. Elektronisch kommutierter Elektromotor (1) nach Anspruch 1, **dadurch gekennzeichnet, dass** der permanentmagnetische Rotormagnet (10) mindestens sechs, bevorzugt mindestens acht Rotorpole aufweist.

3. Elektronisch kommutierter Elektromotor (1) nach Anspruch 1 oder 2, **dadurch gekennzeichnet, dass** der permanentmagnetische Rotormagnet (10) aus mehreren Permanentmagnetsegmenten (14) gebildet ist, welche jeweils die Rotorpole darstellen.

4. Elektronisch kommutierter Elektromotor (1) nach Anspruch 3, **dadurch gekennzeichnet, dass** die Permanentmagnetsegmente (14) in radialer Richtung magnetisiert sind und die Magnetisierungsrichtung von in Umfangsrichtung nebeneinander angeordneter Permanentmagnetsegmente (14) entgegengesetzt ist.

5. Elektronisch kommutierter Elektromotor (1) nach einem der Ansprüche 3 bis 4, **dadurch gekennzeichnet, dass** jedes Permanentmagnetsegment (14) eine minimale radiale Höhe (Hs) aufweist, die größer ist als das 0,25-fache des Außendurchmessers (d_{R}) des Rotormagneten (10).

6. Elektronisch kommutierter Elektromotor (1) nach einem der Ansprüche 3 bis 5, **dadurch gekennzeichnet, dass** die Permanentmagnetsegmente (14) eine Querschnittsform aufweisen, die außen von einem Kreisbogen (15), seitlich von zwei an den Kreisbogen (15) angrenzenden Kreisradienabschnitten (16) und innen von einem Kreissehnenabschnitt (18) begrenzt ist, wobei der Kreisbogen (15) eine Länge aufweist, die im Wesentlichen dem Umfang des Rotormagnets (10) geteilt durch die Rotorpolzahl entspricht.

7. Elektronisch kommutierter Elektromotor (1) nach einem der Ansprüche 3 bis 6, **dadurch gekennzeichnet, dass** die Permanentmagnetsegmente (14) eine Länge (Ls) aufweisen, die im Wesentlichen der Länge (L_{R}) des Rotormagnetabschnitts (11) entspricht.

8. Elektronisch kommutierter Elektromotor (1) nach einem der Ansprüche 3 bis 7, **dadurch gekennzeichnet, dass** die Permanentmagnetsegmente (14) miteinander verklebt und/oder mittels einer Hülse zusammengehalten sind.

9. Elektronisch kommutierter Elektromotor (1) nach einem der Ansprüche 1 bis 8, **dadurch gekennzeichnet, dass** das permanentmagnetische Material für den Rotormagneten (10) ein Neodym-Eisen-Bor-Material oder ein Samarium-Kobalt-Material ist.

10. Elektronisch kommutierter Elektromotor (1) nach einem der Ansprüche 1 bis 9, **dadurch gekennzeichnet, dass** innerhalb des Rotormagneten (10) ein Innenrückschluss (9) aus einem weichmagnetischen Material ausgeführt ist.

11. Elektronisch kommutierter Elektromotor (1) nach einem der Ansprüche 1 bis 10, **dadurch gekennzeichnet, dass** das hohlzylindrische Rotorelement (12) topfförmig ausgebildet ist, wobei dessen Topfboden (21) mit der Rotorwelle (7) verbunden ist und die die hohlzylindrische Statorwicklung (5) umgebende Topfwand ein weichmagnetisches Material zum Ausbilden des Außenrückschlusses (13) umfasst.

12. Elektronisch kommutierter Elektromotor (1) nach Anspruch 11, **dadurch gekennzeichnet, dass** der Topfboden (21) Öffnungen (20) und/oder Aussparungen zur Gewichtsreduktion aufweist, wobei der jeweilige Flächenschwerpunkt der Öffnungen (20) und/oder der Aussparungen in radialer Richtung weiter von einer Rotorachse (A_{R}) entfernt ist als von einem Außenmantel (22) des topfförmigen Rotorelements (12).

13. Elektronisch kommutierter Elektromotor (1) nach einem der Ansprüche 1 bis 12, **dadurch gekennzeichnet, dass** die nutenlose hohlzylindrische Statorwicklung (5) einseitig in eine thermisch gut leitende Ausgussmasse (29) eingebettet ist, wobei die verwendete Ausgussmasse (29) Wärmeleitfähigkeitswerte von 1 W/mK bis zu 20 W/mK aufweist.

14. Elektronisch kommutierter Elektromotor (1) nach einem der Ansprüche 1 bis 13, **dadurch gekennzeichnet, dass** redundante Sensoreinrichtungen zur Bestimmung der Winkellage des Rotors (6) vorgesehen sind, wobei die Sensoreinrichtungen unterschiedliche Sensortypen zum Bestimmen unterschiedlicher physikalischer Größen sind, und wobei bevorzugt ein optischer Encoder mit einem magnetischen Encoder kombiniert vorgesehen sind.

15. Verwendung eines Rotors (6) in einem elektronisch kommutierten Elektromotor (1) nach einem der Ansprüche 1 bis 14, wobei der Rotor (6) ein hohlzylindrisches Rotorelement (12), welches eine Statorwicklung (5) umgibt und als Außenrückschluss (13) wirkend ausgebildet ist, und einen vollzylindrischen Rotormagnetabschnitt (11) aufweist, welcher innerhalb der Statorwicklung (5) angeordnet ist, wobei ein radial äusserer Bereich, welcher mindestens 70 % des Volumens des vollzylindrischen Rotormagnetabschnitts (11) umfasst, permanentmagnetisch als Rotormagnet (10) ausgeführt ist, und wobei der permanentmagnetische Rotormagnet (10) mindestens vier Rotorpole aufweist.
